Europäisches Patentamt

European Patent Office

Office européen des brevets

(19)

(11) Veröffentlichungsnummer: **0 260 690 B1**

(12) # EUROPÄISCHE PATENTSCHRIFT

(45) Veröffentlichungstag der Patentschrift: **22.04.92**

(51) Int. Cl.⁵: **G01L 9/00**, G01F 1/56, G01F 1/64

(21) Anmeldenummer: **87113607.3**

(22) Anmeldetag: **17.09.87**

(54) **Überwachungseinrichtung.**

(30) Priorität: **19.09.86 DE 3631908**

(43) Veröffentlichungstag der Anmeldung:
**23.03.88 Patentblatt 88/12**

(45) Bekanntmachung des Hinweises auf die
Patenterteilung:
**22.04.92 Patentblatt 92/17**

(84) Benannte Vertragsstaaten:
**AT BE DE ES FR GB IT NL SE**

(56) Entgegenhaltungen:
**GB-A- 2 121 542**

(73) Patentinhaber: **Förster, Martin, Dipl.-Ing.**
**Gerwigstrasse 27**
**W-7707 Engen(DE)**

(72) Erfinder: **Förster, Martin, Dipl.-Ing.**
**Gerwigstrasse 27**
**W-7707 Engen(DE)**

(74) Vertreter: **Engelhardt, Guido, Dipl.-Ing.**
**Patentanwalt Montafonstrasse 35 Postfach**
**1350**
**W-7990 Friedrichshafen 1(DE)**

**Beschreibung**

Die Erfindung bezieht sich auf eine Einrichtung zur Überwachung des Betriebsdruckes einer aus einer Leitung ausströmenden elektrolytischen Flüssigkeit.

Zur Überwachung des Druckmitteldruckes in einer Druckmittelzuführungsleitung werden vielfach Druckwächter in Form von Druckschaltern verwendet, die an die Druckmittelzuführungsleitung angeschlossen sind und mittels denen die Druckmittelzufuhr unterbrochen wird, sobald beispielsweise durch einen Leitungsbruch eine einstellbare Druckhöhe unterschritten wird (DE-A-21 50 885). Diese Druckwächter haben sich zwar bewährt, bei der Überwachung des Betriebsdruckes einer mit Nährstoffen angereicherten Flüssigkeit sind diese jedoch nicht einsetzbar, da die beweglichen Bauteile der auch teuren Druckschalter bereits nach kurzer Zeit durch sich an diesen absetzende Stoffpartikel verkleben und somit deren Funktionsfähigkeit in einem erheblichen Maße beeinträchtigt wird.

Des weiteren ist durch die GB-A-21 21 542 eine Einrichtung zur Messung der volumen- oder gewichtsspezifischen Dosis von verkleinerten mittels einer Vorrichtung zugeführten Stoffen oder zur Bestimmung von deren Korngröße bekannt. Der Stoff wird hierbei auf eine polarisierte und isolierte Elektrode geschüttet, deren Leistungsfähigkeit sich von der der Zuführvorrichtung unterscheidet. Des weiteren ist eine Meßschaltung mit Meßinstrumenten zur Messung des Stromes, der von der Elektrode kommt, vorgesehen. Auf diese Weise wird ein Signal erzeugt, das die Dosis des Stoffes mit bekannter Korngröße oder die Korngröße des Stoffes mit bekannter volumen- oder gewichtsabhängiger Dosis darstellt. Diese Einrichtung ist zwar sehr aufwendig in ihrer Bauweise, zur Überwachung des Betriebsdruckes einer aus einer Leitung ausströmenden elektrolytischen Flüssigkeit ist diese aber nicht verwendbar.

Aufgabe der Erfindung ist es daher, eine Einrichtung zur Überwachung des Betriebsdruckes einer aus einer Leitung ausströmenden elektrolytischen Flüssigkeit zu schaffen, mittels der auf äußerst einfache aber zuverlässige Weise insbesondere festzustellen ist, ob der Mindestdruck einer mit Nährstoffen angereicherten Flüssigkeit vorhanden ist. Der dazu erforderliche Bauaufwand soll gering gehalten werden, dennoch soll aber stets eine sichere und störungsfreie Funktion gewährleistet sein.

Gemäß der Erfindung wird dies dadurch erreicht, daß in dem Strahlbereich der aus der Zuführungsleitung ausströmenden Flüssigkeit ein Flüssigkeitssensor angeordnet ist, der mit einem ersten Potential, beispielsweise einer Stromquelle, und einem Steuergerät zur Auswertung der bei Beaufschlagung des Flüssigkeitssensors durch den Flüssigkeitsstrahl anfallenden Signale verbunden und daß die Zuführungsleitung der Flüssigkeit an ein zweites Potential, vorzugsweise an Masse, angeschlossen sind.

Zweckmäßig ist es hierbei, den Flüssigkeitssensor gegenüber der Flüssigkeitszuführungsleitung vertikal und/oder horizontal zu dieser verstellbar zu halten, wobei dieser mittels eines verformbaren Drehbügels oder dgl. aufgehängt sein kann.

Zur Einstellung der Zusammensetzung einer aus der elektrolytischen Flüssigkeit und einer oder mehreren dieser zugeführten Zusatzstoffen gebildeten Mischung, beispielsweise eines in einem Tränkeautomaten aufbereiteten Futtersmittels, ist es angebracht, das Steuergerät an eine Absperreinrichtung anzuschließen, mittels der in Abhängigkeit von der Beaufschlagung des Flüssigkeitssensors die Zuführung eines Zusatzstoffes eingestellt werden kann.

Nach einer Weiterbildung kann hierbei das Aufnahmebehältnis der elektrolytischen Flüssigkeit mit einem weiteren vorzugsweise höhenverstellbar gehaltenen, an das Steuergerät angeschlossenen Flüssigkeitssensor versehen werden, mittels dem in Abhängigkeit von dem Flüssigkeitsniveau in dem Aufnahmebehältnis die Flüssigkeitszuführungsleitung z.B. für eine einstellbare Zeitdauer verschließbar oder zu öffnen ist.

Die beiden Flüssigkeitssensoren sollten zweckmäßigerweise mit vorzugsweise einstellbarem seitlichen Abstand zueinander im Bereich des Flüssigkeitsstrahles angeordnet werden.

Die Signale der beiden Flüssigkeitssensoren können wechselweise mittels des Steuergerätes ausgewertet werden, es ist aber auch möglich, die beiden Flüssigkeitssensoren an unterschiedliche Potentiale oder gemeinsam an ein Potential und die Zuführungsleitung der elektrolytischen Flüssigkeit an ein anderes Potential anzuschließen.

Mittels der gemäß der Erfindung ausgebildeten Überwachungseinrichtung ist es auf sehr einfache Weise möglich, festzustellen, ob eine aus einer Leitung ausströmende elektrolytische Flüssigkeit den vorgegebenen Betriebsdruck aufweist oder ob dieser unter einen vorbestimmten Wert abgesunken ist. Wird nämlich in dem Strahl der ausströmenden Flüssigkeit ein Flüssigkeitssensor angeordnet, der mit einem ersten Potential und einem Steuergerät verbunden ist, und wird die Flüssigkeitsleitung an ein zweites Potential angeschlossen, so wird mittels des Flüssigkeitsstrahles der Stromkreis geschlossen, so daß bei Beaufschlagung des Flüssigkeitssensors durch den Flüssigkeitsstrahl ein Signal ansteht. Und durch dieses auswertbare Signal wird somit angezeigt, daß der Flüssigkeitsstrahl mit einem vorgegebenen Druck, der dem Betriebsdruck entspricht, aus der Flüssigkeitsleitung austritt. Fällt der Betriebsdruck dagegen unter den durch die Lage des Flüssigkeitssensors einstellbaren Wert ab, wird dieser nicht mehr beaufschlagt; eine zugeordnete Vorrichtung, z.B. eine Dosiereinrichtung, kann daraufhin sofort abgeschaltet werden.

Der Bauaufwand, mittels dem auf diese Weise der Betriebsdruck einer aus einer Zuführungsleitung ausströmenden Flüssigkeit zu überwachen ist, ist äußerst gering. Dennoch ist eine hohe Betriebssicherheit sowie ein langer störungsfreier Betrieb gewährleistet, da dazu nur wenige Bauteile, die nahezu keinem Verschleiß unterliegen, benötigt werden. Die erfindungsgemäße Überwachungseinrichtung ermöglicht somit bei einfacher Handhabung eine zuverlässige Ermittlung der Druckhöhe einer ausströmenden Flüssigkeit und ist zur Vermeidung von unkontrollierten Mischungsverhältnissen in vorteilhafter Weise insbesondere bei der Aufbereitung von flüssigen Futtermitteln in Tränkeautomaten einsetzbar.

In der Zeichnung sind zwei Ausführungsbeispiele einer Einrichtung zur Überwachung des Betriebsdruckes einer aus einer Leitung ausströmenden elektrolytischen Flüssigkeit dargestellt, die nachfolgend im einzelnen erläutert sind. Hierbei zeigt, jeweils in schematischer Darstellung:

Figur 1     eine Einrichtung mit einem in einem Flüssigkeitsstrahl einer ausströmenden Flüssigkeit angeordneten Flüssigkeitssensor und

Figur 2     einen Tränkeautmaten mit einer Einrichtung zur Bestimmung des Betriebsdruckes der diesem zuströmenden Flüssigkeit.

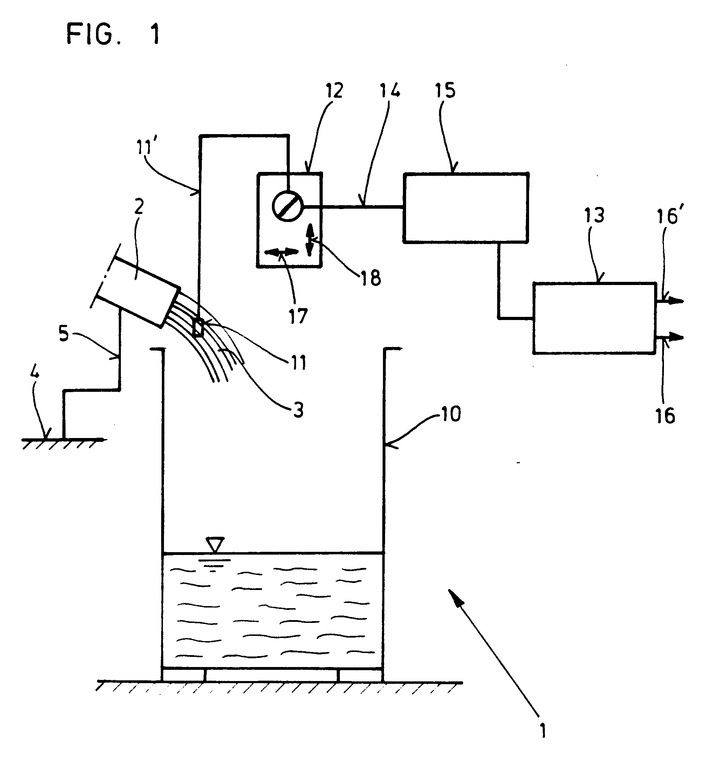

Die in Figur 1 dargestellte und mit 1 bezeichnete Einrichtung dient zur Überwachung des Betriebsdruckes einer aus einer Zuführungsleitung 2 ausströmenden elektrolytischen Flüssigkeit, um in Abhängigkeit von dem Betriebsdruck der Flüssigkeit eine Mischung und/oder eine andere Einrichtung zu betätigen oder stillzusetzen.

Dazu sind in dem Bereich des aus der Zuführungsleitung 2 austretenden Flüssigkeitsstrahles 3 ein Flüssigkeitssensor 11 angeordnet, der mittels eines biegsamen Drahtbügels 11′ an einer, wie es durch die eingezeichneten Pfeile 17 und 18 verdeutlicht ist, horizontal und vertikal verstellbaren Halterungen 12 aufgehängt ist. Über eine Steuerleitung 14, in die ein Verstärker 15 eingesetzt ist, ist der Flüssigkeitssensor 11 mit einem Steuergerät 13 verbunden, von dem Steuersignale 16 und/oder 16′ abgenommen werden können.

Der Flüssigkeitssensor 11 ist somit an ein stromführendes erstes Potential angeschlossen, die Zuführungsleitung 2 über eine Stromleitung 5 an eine Masse 4 als zweites Potential, so daß beim Ausströmen der elektrolytischen Flüssigkeit mit einem Mindestdruck, der dem Betriebsdruck entspricht, in ein Aufnahmebehältnis 10 der Flüssigkeitssensor 11, dessen Lage einstellbar ist, beaufschlagt wird. Von diesem und der Zuführungsleitung 2 wird somit über die elektrolytische Flüssigkeit ein Stromkreis geschlossen. Fällt dagegen der Druck der ausströmenden Flüssigkeit derart ab, daß der Flüssigkeitssensor 11 von dem Flüssigkeitsstrahl 3 nicht mehr beaufschlagt wird - selbstverständlich ist der Flüssigkeitssensor 11 derart im Bereich des Flüssigkeitsstrahles 3 anzuordnen, daß bei einer gewählten Druckhöhe eine Beaufschlagung erfolgt - , so wird dies mittels des Steuergerätes 13 erfaßt und eine der Einrichtung 1 zugeordnete Maschine kann entsprechend geschaltet werden.

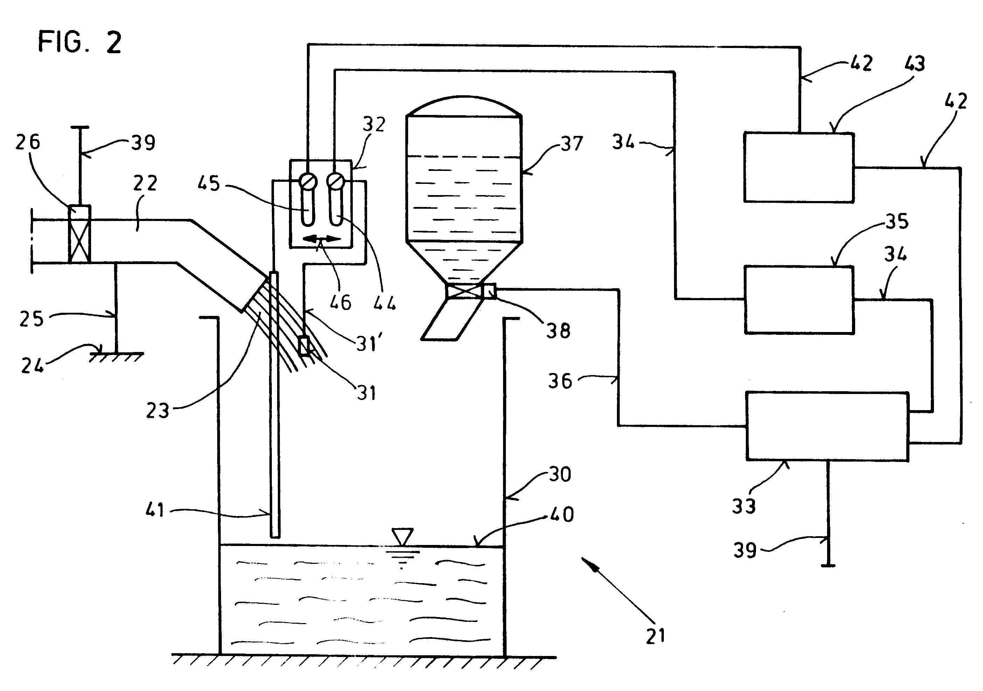

Die Einrichtung 21 nach Figur 2 ist einem mit 30 bezeichneten Tränkeautomaten zugeordnet, in dem aus einer über eine Leitung 22 zugeführten elektrolytischen Flüssigkeit und einem Pulver, das in einem Vorratsbehältnis 37 aufbewahrt wird, ein Futtermittel aufbereitet wird. Im Bereich des Flüssigkeitsstrahles 23 ist wiederum ein Flüssigkeitssensor 31 mittels eines Drahtbügels 31′ aufgehängt, der an einer Halterung 32 angebracht ist. Diese ist, wie dies durch den Pfeil 46 gekennzeichnet ist, horizontal verstellbar. Außerdem ist der Drahtbügel 31′ mittels eines Schlitzes 44 höhenverstellbar, so daß der Flüssigkeitssensor 31 ohne Schwierigkeiten auf den Flüssigkeitsstrahl 23 ausgerichtet werden kann.

Über eine Leitung 34, in die ein Verstärker 35 eingesetzt ist, ist der Flüssigkeitssensor 31 mit einem Steuergerät 33 verbunden, das über eine Leitung 36 an ein in dem Vorratsbehältnis 37 eingebautes Absperrventil 38 und über eine weitere Leitung 39 an ein in die Leitung 22 eingesetztes Absperrventil 26 angeschlossen ist. Der Flüssigkeitssensor 31 ist auch bei diesem Ausführungsbeispiel über die Leitung 34 mit einer Stromquelle und damit mit einem ersten Potential verbunden, die Zuführungsleitung 22 dagegen ist über eine Leitung 25 an eine Masse 24 angeschlossen und bildet somit das zweite Potential, so daß bei Beaufschlagung des Flüssigkeitssensors 31 durch den aus der Zuführungsleitung 22 ausströmenden Flüssigkeitsstrahl der Betriebsdruck der Flüssigkeit festzustellen ist.

Sinkt der Betriebsdruck der Flüssigkeit unter einen vorgegebenen Wert ab, d.h. wird nicht genügend Flüssigkeit dem Tränkeautomaten 30 zugeführt, so wird über das Steuergerät 33 das Absperrventil 38 betätigt. Die Zufuhr von Pulver aus dem Vorratsbehälter 37 wird dadurch unterbunden, eine unkontrollierte Zusammensetzung des aufzubereitenden Futtermittels wird somit vermieden.

Bei der Einrichtung 21 ist ein weiterer horizontal und mittels eines Schlitzes 45 auch vertikal verstellbar aufgehängter Flüssigkeitssensor 41 vorgesehen, der ebenfalls im Bereich des Flüssigkeitsstrahles 23 angeordnet und über eine mit einem Verstärker 43 versehene Leitung 42 an das Steuergerät 33 angeschlossen ist. Der Flüssigkeitssensor 41 ragt hierbei in den Tränkeautomaten 30 hinein, so daß in diesem das Flüssigkeitsniveau 40 bestimmbar ist. Sobald dieses unterhalb des Flüssigkeitssensors 41 abfällt, wird der Tränkeautomat 30 in Betrieb genommen.

Beide Flüssigkeitssensoren 21 und 41, deren Signale wechselseitig auswertbar sind, können bei diesem Ausführungsbeispiel an unterschiedliche Potentiale angeschlossen werden, es ist aber auch möglich, diese gemeinsam an ein Potential und die Zuführungsleitung 22 an ein anderes Potential anzuschließen, um einen Stromkreis zu erhalten. Bei einer Unterbrechung des Stromkreises, d.h. bei ungenügender Flüssigkeitszufuhr über die Zuführungsleitung 22, wird mit Hilfe des Steuergerätes 33 auch die Zufuhr des Pulvers aus dem Vorratsbehälters 37 unterbrochen, so daß unkontrollierbare Mischungen zuverlässig vermieden werden.

**Patentansprüche**

1. Einrichtung zur Überwachung des Betriebsdruckes einer aus einer Leitung ausströmenden elektrolytischen Flüssigkeit,
   **dadurch gekennzeichnet,**
   daß in dem Strahlbereich der aus der Zuführungsleitung (2; 22) ausströmenden Flüssigkeit ein Flüssigkeitssensor (11; 31) angeordnet ist, der mit einem ersten Potential und einem Steuergerät (13; 33) zur Auswertung der bei Beaufschlagung des Flüssigkeitssensors (11; 31) durch den Flüssigkeitsstrahl (3; 23) anfallenden Signale verbunden ist, und daß die Zuführungsleitung (2; 22) der Flüssigkeit an ein zweites Potential angeschlossen ist.

2. Überwachungseinrichtung nach Anspruch 1,
   **dadurch gekennzeichnet,**
   daß der Flüssigkeitssensor (11; 31) gegenüber der Flüssigkeitszuführungsleitung (2; 22) vertikal und/oder horizontal zu dieser verstellbar gehalten ist.

3. Überwachungseinrichtung nach Anspruch 2,
   **dadurch gekennzeichnet,**
   daß der Flüssigkeitssensor (11; 31) mittels eines verformbaren Drahtbügels (11; 31) aufgehängt ist.

4. Überwachungseinrichtung nach einem oder mehreren der Ansprüche 1 bis 3,
   **dadurch gekennzeichnet,**
   daß zur Einstellung der Zusammensetzung einer aus der elektrolytischen Flüssigkeit und einer oder mehreren dieser zugeführten Zusatzstoffen gebildeten Mischung, beispielsweise eines in einem Tränkeautomaten (30) aufbereiteten Futtermittels, das Steuergerät (33) an ein Absperrventil 38 angeschlossen ist, mittels dem in Abhängigkeit von der Beaufschlagung des Flüssigkeitssensors (31) die Zuführung eines Zusatzstoffes einstellbar ist.

5. Überwachungseinrichtung nach Anspruch 4,
   **dadurch gekennzeichnet,**
   daß das Aufnahmebehältnis der elektrolytischen Flüssigkeit mit einem vorzugsweise höhenverstellbar gehaltenen, an das Steuergerät (33) angeschlossenen Flüssigkeitssensor (41) versehen ist, mittels dem in Abhängigkeit von dem Flüssigkeitsniveau (40) in dem Aufnahmebehältnis die Flüssigkeitszuführungsleitung (22) z.B. für eine einstellbare Zeitdauer verschließbar oder zu öffnen ist.

6. Überwachungseinrichtung nach einem oder mehreren der Ansprüche 1 bis 5,
   **dadurch gekennzeichnet,**
   daß die beiden Flüssigkeitssensoren (31, 41) mit vorzugsweise einstellbarem seitlichen Abstand zueinander im Bereich des Flüssigkeitsstrahles (23) angeordnet sind.

7. Überwachungseinrichtung nach Anspruch 6,
   **dadurch gekennzeichnet,**
   daß die Signale der beiden Flüssigkeitssensoren (31, 41) wechselweise mittels des Steuergerätes (33) auswertbar sind.

8. Überwachungseinrichtung nach Anpruch 6,
   **dadurch gekennzeichnet,**
   daß die beiden Flüssigkeitssensoren (31, 41) an unterschiedliche Potentiale angeschlossen sind.

9. Überwachungseinrichtung nach Anspruch 6,
   **dadurch gekennzeichnet,**
   daß die beiden Flüssigkeitssensoren (31, 41) gemeinsam an ein Potential und die Zuführungsleitung (22) der elektrolytischen Flüssigkeit an ein anderes Potential angeschlossen sind.

**Claims**

1. Device for monitoring the operating pressure of an electrolytic fluid as it emerges from a pipe,
   **characterized in that**
   a fluid sensor (11; 31) is arranged in the outlet flow from feed pipe (2; 22), said sensor being connected to a first potential and a control unit (13; 33) to evaluate the signals which the fluid sensor (11; 31) transmits in response to the volume of fluid (3; 23) flowing past it, and in that the feed pipe (2; 22) is connected to a second potential.

2. Monitoring device as claimed in claim 1, **characterized in that** the fluid sensor (11; 31) can be adjusted vertically and/or horizontally relative to the feed pipe (2; 22)

3. Monitoring device as claimed in claim 2, **characterized in that** the fluid sensor (11; 31) is suspended by means of an adjustable wire bracket (11'; 31').

4. Monitoring device as claimed in one or more of claims 1 to 3, **characterized in that** to adjust the composition of a mixture made up of the electrolytic fluid and one or more additives in this fluid, for instance a feedstuff prepared for an automatic feeding device (30), the control unit (33) is connected to a non-return valve (38) which can be used to vary the supply of an additive in a manner proportional to the reading obtained from the fluid sensor (31).

5. Monitoring device as claimed in claim 4, **characterized in that** the reservoir for the electrolytic fluid is provided with a fluid sensor (41) connected to the control unit (33), preferably having a facility for height adjustment and which is capable, in response to the fluid level (40) in the reservoir, of closing or opening the feed pipe (22) for a preselectable period.

6. Monitoring device as claimed in one or more of claims 1 to 5, **characterized in that** the two fluid sensors (31, 41) are arranged in the path of the fluid (23) as it emerges from the pipe, said sensors each preferably having the ability to be offset laterally relative to the other.

7. Monitoring device as claimed in claim 6, **characterized in that** the signals from both fluid sensors (31, 41) can be evaluated alternately by the control unit (33).

8. Monitoring device as claimed in claim 6, **characterized in that** both fluid sensors (31, 41) are connected to different potentials.

9. Monitoring device as claimed in claim 6, **characterized in that** both fluid sensors (31, 41) are connected to the same potential and the feed pipe (22) for the electrolytic fluid is connected to a different potential.

**Revendications**

1. Equipement pour la surveillance de la pression de service d'un liquide électrolytique sortant d'une conduite, se caractérisant par le fait que dans le jet de liquide sortant de la conduite d'arrivée (2; 22), il est disposé un capteur de liquide (11; 31) lié à un premier potentiel et une unité de commande (13; 33) qui sert à évaluer les signaux produits par le contact du jet de liquide (3; 23) avec le capteur de liquide (11; 31) et que la conduite d'arrivée (2; 22) du liquide est liée à un deuxième potentiel.

2. Equipement de surveillance d'après la revendication 1, se caractérisant par le fait que le capteur de liquide (11; 31) face à la conduite d'arrivée du liquide (2; 22) se laisse déplacer verticalement et/ou horizontalement par rapport à celle-ci.

3. Equipement de surveillance d'après la revendication 2, se caractérisant par le fait que le capteur de liquide (11; 31) est suspendu à l'aide d'un étrier en fil (11'; 31') qui se laisse déformer.

4. Equipement de surveillance d'après une ou plusieurs des revendications 1 à 3, se caractérisant par le fait que pour régler la composition d'un mélange formé par le liquide électrolytique et un ou plusieurs additifs ajoutés à ce liquide, p. ex. un aliment traité dans un appareil d'abreuvage (30), l'unité de commande (33) est branchée sur une vanne de barrage (38) qui permet de doser l'additif en fonction de l'intensité du contact sur le capteur de liquide (31).

5. Equipement de surveillance d'après la revendication 4, se caractérisant par le fait que le réservoir du liquide électrolytique est équipé d'un capteur de liquide (41) branché sur l'unité de commande (33) et réglable de préférence en hauteur qui permet, en fonction du niveau du liquide (40) dans le réservoir, de fermer ou d'ouvrir la conduite d'arrivée du liquide (22) p. ex. pendant un certain temps réglable.

6. Equipement de surveillance d'après une ou plusieurs des revendications 1 à 5, se caractérisant par le fait que les deux capteurs de liquide (31, 41) sont disposés dans le jet de liquide (23) avec, de préférence, un écart latéral réglable.

7. Equipement de surveillance d'après la revendication 6, se caractérisant par le fait que les signaux des deux capteurs de liquide (31, 41) se laissent évaluer alternativement au moyen de l'unité de commande (33).

8. Equipement de surveillance d'après la revendication 6, se caractérisant par le fait que les deux capteurs de liquide (31, 41) sont liés à des potentiels différents.

9. Equipement de surveillance d'après la revendication 6, se caractérisant par le fait que les deux capteurs de liquide (31, 41) sont liés à un potentiel commun tandis que la conduite d'arrivée (22) du liquide électrolytique est liée à un autre potentiel.

## FIG. 1

FIG. 2

EP 0 260 690 B1